# EUROPEAN PATENT SPECIFICATION

(11) **EP 1 334 305 B1**
(45) Date of publication and mention of the grant of the patent: **28.06.2006**
(21) Application number: 01978470.1
(22) Date of filing: 11.10.2001
(51) Int. Cl.: F16P 1/00, B65H 63/00, D21G 5/00

(54) **REELABLE SAFETY DEVICE**
AUFWICKELBARE SICHERHEITSVORRICHTUNG
DISPOSITIF DE SECURITE A ENROULEMENT

(30) Priority: 24.10.2000 FI 20000420 U
(43) Date of publication of application: 13.08.2003
(73) Proprietor: Metso Paper, Inc., 00130 Helsinki (FI)
(72) Inventor: VENETJOKI, Petteri, FIN-00700 Helsinki (FI); VILJANMAA, Mika, FIN-00700 Helsinki (FI)
(74) Representative: Hakola, Unto Tapani
(86) International application number: PCT/FI2001/000881
(87) International publication number: WO 2002/035140

(56) References cited:
- EP-A1- 0 203 040
- DE-A1- 4 313 475
- GB-A- 515 784
- GB-A- 2 038 438
- SE-B- 386 098
- US-A- 3 293 941
- US-A- 5 865 119

## Description

The invention relates to a safety device which is intended to be used in connection with machines and devices in the production or finishing line of paper and/or paperboard as well as in connection with devices utilized for production of pulp used in the manufacture of paper and/or paperboard to improve occupational safety and working conditions. Hereinbelow in the text, the shorter term "papermaking line" refers in this application broadly to the production of paper including also production of pulp and paperboard and finishing of paper, as well as the machines and devices related thereto.

The machines and devices used in the production line of paper or paperboard contain several sections in which the operating and maintenance personnel are exposed to various factors that considerably reduce occupational safety. Even in the normal operating state of the apparatus for example different kinds of rotating and moving parts of the machine, hot surfaces and high noise level cause occupational hazards. In disturbance and fault situations that occur in the operation of the apparatus, additional hazards may be caused for example by broken high-pressure pipes and hoses as well as by pieces loosened from the processed material or from the apparatus itself, that fly in the environment. Due to these risk factors it is common practice that the safety instructions or operating instructions of the apparatus prohibit or restrict the access to the danger area while the apparatus is operating and that the access is denied entirely by utilizing safety gates, if necessary.

In practice, however, it is often necessary for the operating and maintenance personnel of the apparatus to move in the immediate vicinity of the danger area, or in the actual danger area while the apparatus is operating. For example the area in front of the roll assembly of a so-called soft calender used in the finishing treatment of paper, either on so-called machine level (floor level) or above the same on so-called maintenance level, is utilized for moving from the so-called service side to the so-called operating side transversely with respect to the travel direction of the paper web. When moving or working in the aforementioned area, risk factors are often caused for example by the rapidly moving paper web, the cutting devices of the paper web, rolls rotating nearby and the pieces possibly loosened from the roll coating of the rolls that fly into the environment.

A safety device for paper machines is known from DE 4 313 475 A, which discloses a moving platform, for the operation at a calendering machine that has a protective shield, at the leading side, which moves upwards over its upper edge so that the operative on the platform cannot move into a danger area at the calender.

Publication EP 203 040 A discloses an accident prevention guard for carding plants of the textile industry or for other uses, which is made up, at least in part, of a flexible curtain capable of being slided horizontally, means for starting and stopping the plant being combined with said curtain. The guard further includes blocking means which prevent the sliding, that is, the opening of the curtain unless all the members of the plant are at standstill. Said curtain is apt to be wound on a rotor having vertical axis and to be unwound therefrom.

At present, there is no suitable protection solution available by means of which the workers would be protected from risk factors in situations of the above kind so that the protection method or safety device used therein would not at the same time prevent or significantly complicate the use and the control and maintenance measures of the apparatus.

It is a purpose of the present invention to disclose a safety device, which considerably reduces the danger areas related to the machines and devices used in the production line of paper or paperboard, thus making it safer than before to move in the vicinity of the aforementioned machines and devices during the operation and use of the same. The safety device according to the invention does not, however, significantly complicate the use of the machines or apparatuses, or the control or maintenance measures of the same.

To achieve this purpose, the invention is primarily characterized in what will be presented in the characterizing part of claim 1. In other words, the safety device according to the invention that is used in the production line of paper or paperboard is a reelable safety structure by means of which a part of a machine, a machine or a device and the danger area produced by said part of a machine, machine or device is isolated from the passage and working areas. Furthermore, the other claims present some preferred embodiments of the invention.

In the following, the most important advantages attained by means of the present invention will be described.

As a result of the reelable structure, the safety device can be easily reeled away from the working area during maintenance and repair and thereafter it can be easily and rapidly reeled back into its place. In a preferred embodiment of the invention, the structure of the safety device is implemented in such a manner that the safety device can be reeled away only from such a section in front of the apparatus which is appropriate for the-maintenance or control operation in question. When the safety device has a strong structure and it is for example made of metal sheets or slats, the safety structure, when installed for example in front of a rotating roll assembly, efficiently provides protection against the pieces that possibly fly from the roll assembly, at the same time preventing the workers from accidentally touching or falling to the dangerous rotating parts of the apparatus or machine.

Moreover, it is an important advantage of the invention that the safety device enables the protection against various factors that reduce and impair occupational safety. In other words, besides providing protecting against mechanical risk factors, the safety device according to the invention can be implemented with such a structure that it efficiently insulates heat and noise. In other words, by means of the safety device it is possible to reduce the danger area of the machine or apparatus, at the same time increasing the space of safe working and passage areas with better working conditions.

Furthermore, the function of the safety device can be automated in such a manner that the safety device is automatically reeled in its place to the protective position for example in a situation where the operating mode or the running speed of the machine or apparatus increases to such an extent that said part of the apparatus that is equipped with the safety device can cause a danger situation. On the other hand, during running preparations, the safety device is automatically reeled away from the front of the apparatus, wherein it is possible for example for the person operating the machine to maintain visual contact to the apparatus.

Furthermore, it is an advantage of the invention that the safety device can be implemented at low cost by using structural solutions and manufacturing methods known as such from other applications. When the safety device according to the invention is reeled up away from the protective position, it occupies only a small amount of space, and it does not contain loose parts which could cause danger situations for example by making the passages narrow and/or by ending up accidentally between the moving parts of the apparatus to be protected, etc.

In the following, the invention will be described with reference to the appended drawings, in which
- Fig. 1: illustrates in an end view the embodiments (A to C) of the safety device according to the invention in a soft calender,
- Fig. 2: illustrates the situation of Fig. 1 in a front view,
- Fig. 3: shows in principle a structure of the safety device according to the invention in an end view,
- Fig. 4: shows in principle the structure according to Fig. 3 in a front view,
- Fig. 5: shows in principle an embodiment of a lamella in the safety structure in a side view,
- Fig. 6: shows in principle a second embodiment of a lamella in the safety structure in a side view,
- Fig. 7: shows in principle a third embodiment of a lamella in the safety structure in a side view,
- Fig. 8: shows in principle a fourth embodiment of a lamella in the safety structure in a side view.

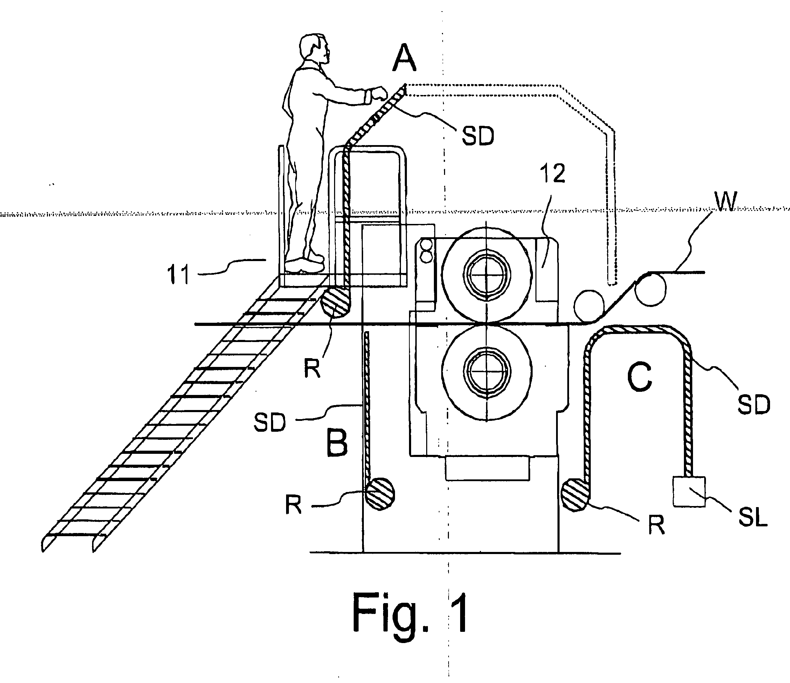

Fig. 1 shows in principle side views of possible applications of the safety device SD according to the invention on the machine level and maintenance level of a soft calender. In Fig. 1, the different installation positions of the safety device according to the invention are marked with letters A to C. It must be noted that even though the use of the safety device according to the invention is in the following example described in connection with a soft calender in particular, in this application the soft calender is used only as an example of a possible embodiment of the invention.

In Fig. 1 the safety device SD according to the invention installed in the position A makes it possible for a worker to move on the maintenance level 11, so that it is impossible for said worker to accidentally fall to the rotating parts contained in the roll assembly 12. At the same time the safety device SD also protects the worker from the rotating parts of the roll assembly, such as from the pieces that are possibly loosened from the roll coatings of the rolls and fly into the environment. When a web break possibly occurs in the paper web W, the safety device SD prevents the paper web unwound from the apparatus in an uncontrolled manner and the parts of the same from injuring or unbalancing the worker down from the maintenance level 11. When the safety device SD is reeled up on the reel R, the worker has free access to the different parts of the roll assembly 12 for maintenance or control measures.

In the position A in Fig. 1, a broken line illustrates a method of installing the safety device SD, in which the safety device SD forms a funnel-like structure around the apparatus it protects. Besides providing better protection for the worker, this installation mode is also advantageous in that respect that the aforementioned funnel-like structure helps to maintain an optimal atmosphere in view of the process, because the structure isolates the process from the surrounding space, preventing for example the free flow of gases or heat.

Fig. 1 also shows positions B and C as examples of the installation targets of the safety device SD according to the invention on the machine level. The safety device SD installed in the position C in the manner shown in Fig. 1 brings about for example a safe passage in front of the roll assembly 12 from the service side of the soft calender to the operating side, in other words transversely through the apparatus from one side of the apparatus to the other. In the position C, the safety device SD protects the worker for example from the paper web W moving rapidly overhead.

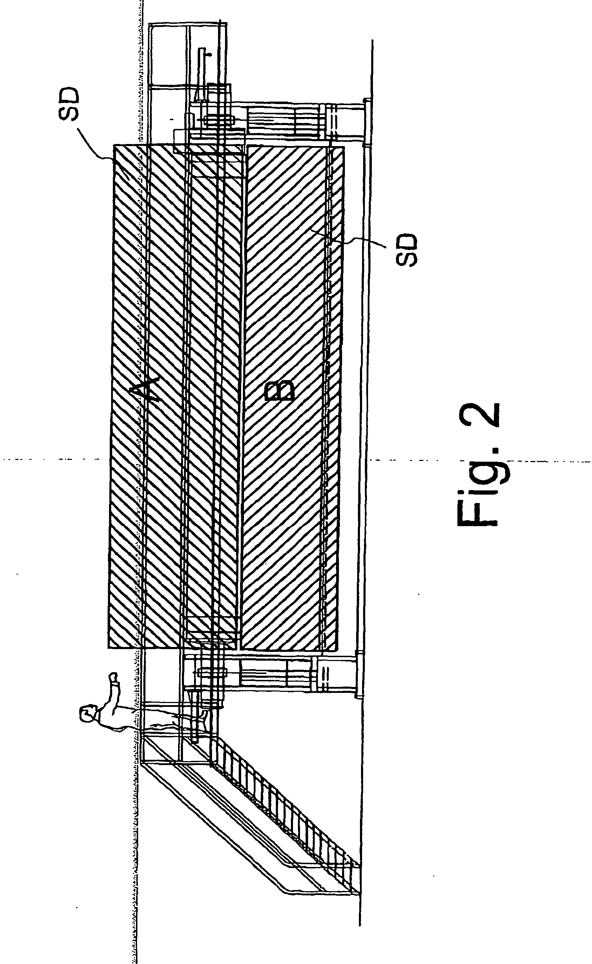

Fig. 2 shows a situation corresponding to Fig. 1 seen from the front in the travel direction of the paper web W. Between the safety devices SD in the positions A and B there remains a horizontal opening, via which the paper web W is capable of moving in the running situation.

It is, of course, obvious for anyone skilled in the art that in the unwinding and reeling up direction the safety device SD may also be formed of two or more different parts of the safety device, some of which are reeled to a closed position for example upwards, and the others for example downwards, in a corresponding manner. It is also possible that the safety device SD is as wide as the entire target to be protected, for example equally wide as the roll assembly of the soft calender used as an example herein, or the safety device SD may also be composed of several separate adjacent parts, which parts can be opened and closed irrespective of each other.

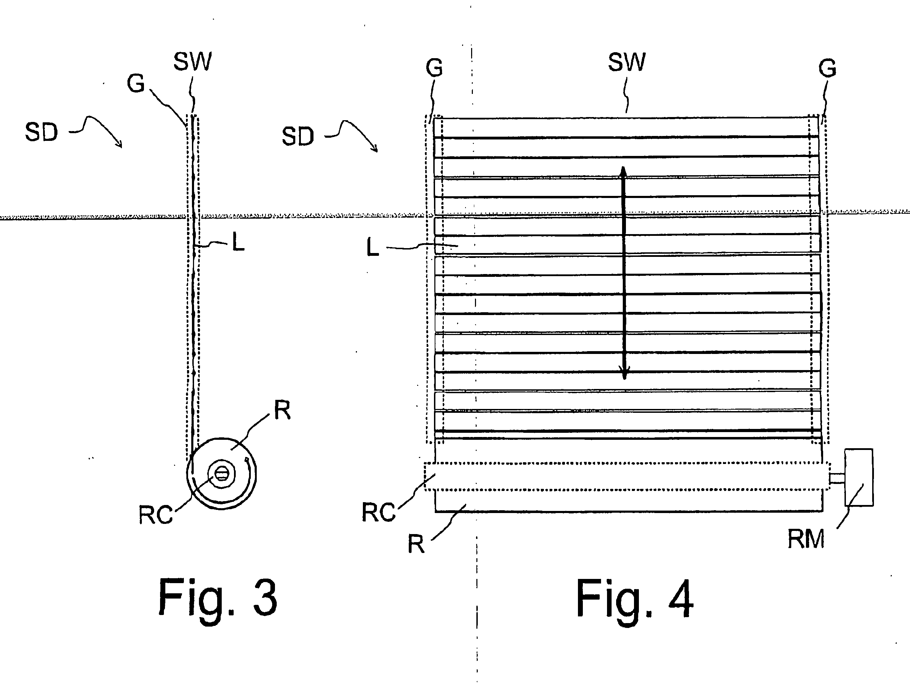

Fig. 3 shows in principle an end view of an embodiment of the safety device SD according to the invention. Fig. 4 illustrates in a corresponding manner the embodiment of the safety device SD according to Fig. 3 in a front view. The safety structure SW shown in Figs 3 and 4 can be reeled up away from the protective position around a reeling core RC to form a reel R. The reel R can be encapsulated or open, and the ends of the safety structure SW which are located sideways with respect to the reeling direction of said safety structure can be placed into guiding means G, such as guiding rails or the like. With the guiding means G it is possible to attain the desired shape for the safety structure SW, for example a curved shape that agrees with the shapes of the apparatus that causes danger, and the guiding means G also support the safety structure, if necessary, for example in such an embodiment in which the reel R is placed in a lower position with respect to the unwinding direction of the safety structure SW.

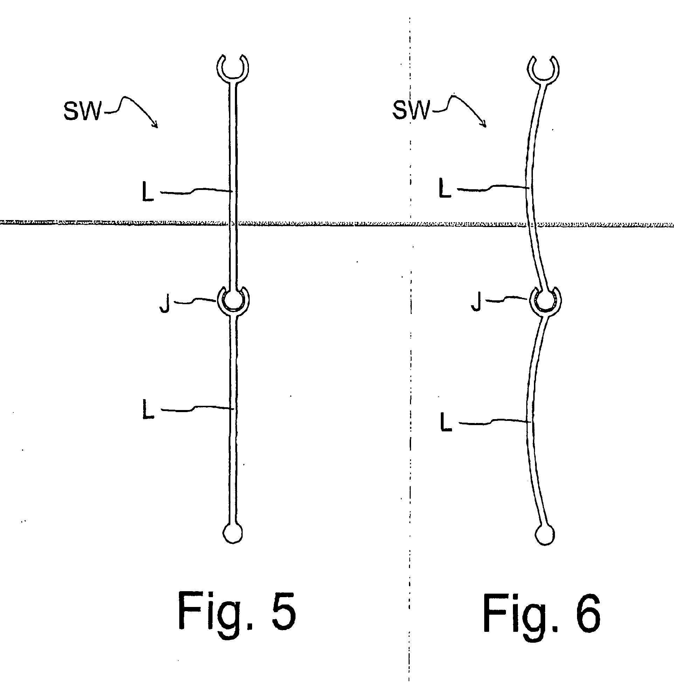

The safety structure SW illustrated in Figs 3 and 4 is composed of lamellae L transverse to the reeling direction of said safety structure SW, that are fixed to each other in an articulated manner. Figs 5 to 8 show some possible implementations of said lamellae in more detail. Advantageously the lamellae L can be made of aluminium profile, wherein the safety structure SW becomes mechanically firm and durable, but at the same time also light in weight.

Advantageously, the lamellae L shown in Fig. 5 are made entirely of aluminium profile, and they are thus primarily suitable for protection against mechanical risk factors, such as rotating machine parts, flying pieces and discharges of fluid or steam. The articulated structure J connecting the lamellae L that are attached to each other and located on top of each other in the reeling direction is in the lamellae according to Fig. 5 connected to the structure of the lamellae L themselves as a shaping of the upper and lower end of the lamella L. Fig. 6 shows an alternative embodiment of the lamellae L, in which individual lamellae L have a curved shape to facilitate the forming of the reel R around the reeling core RC, and to reduce the diameter of the reel R that is being formed.

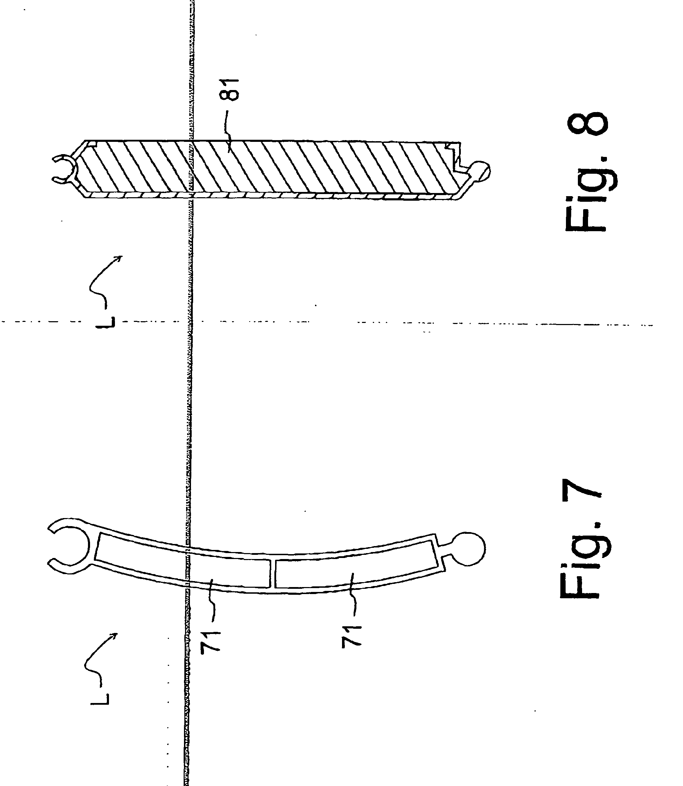

In the embodiment of the lamellae shown in Fig. 7 the structure of the lamella L contains cooling channels 71 transverse with respect to the reeling direction, via which channels pressurized air or the like can be blown to efficiently cool down the structure of the lamella L, thus enhancing the heat insulating effect of the safety structure SW. Pressurized air can be conveyed to the air channels 71 via guiding members G placed to the ends of the lamellae L that are positioned sideways towards the reeling direction.

In the embodiment shown in Fig. 8 the lamella L made of aluminium profile is also equipped with another structure 81 made of sound attenuating material. Said structure may be for example an acoustic board, which enhances the sound attenuating effect of the safety structure SW composed of lamellae L. The material of the structure 81 can also be selected in such a manner that in addition to sound insulation, said material also functions as a heat insulating structure.

The reelable safety structure can, of course, be composed by combining several structures shown above in principle in Figs 5 to 8 so that for example some of the lamellae L are equipped with acoustic boards within their entire transverse length or part of their length, and some of the lamellae L are for example made of aluminium only. Furthermore, some of the lamellae L can be equipped with window structures of desired size, for example by using impact resistant polycarbonate plastic. It is also possible that the lamellae contain openings for control operations and other corresponding measures. Furthermore, it is possible to supplement the structure of the lamellae L for example both with cooling channels and a sound attenuating structure. Naturally, the cooling can also be implemented with cooling channels outside the lamellae L, or by using a completely external pressurized air blast directed for example towards the surface of the lamella L It is obvious for anyone skilled in the art that it is also possible to implement liquid cooling by means of cooling channels. It is also possible that the outer surface of the lamellae L directed towards the heat radiating apparatus is treated for example by polishing the aluminium surface of said lamellae L so that it starts to reflect heat radiation, or a separate reflective surface structure is fixed to the lamella L, wherein said lamella L isolates the passage area and the working area from the heat emitted by said apparatus without a separate air or liquid cooling.

Furthermore, it is obvious that the reelable safety structure SW according to the invention can also be implemented by means of different flexible textures and films, such as textiles or plastic films, wherein the safety structure SW can also be unwound and reeled up without articulations etc. implemented in the safety structure SW. One alternative for implementing the safety structure SW is the use of material corresponding to/resembling the wire cloth of a paper machine. The reelable safety structure SW according to the invention can also be manufactured from a flexible sheet.

Furthermore, the rigid lamellae L that are articulated to each other can also be manufactured of materials other than aluminium. The lamellae can, for example, be made of metal or plastic sheets which are attached to each other by means of separate articulated structures fixed to the lamellae by riveting or other corresponding manner.

It is possible for the worker to move the reelable safety structure SW manually to the protective position, and, in a corresponding manner, away from the front of the apparatus. The aforementioned solution is suitable for safety structures SW which are sufficiently small in size and weight to be transferred manually. The reeling core RC can also be equipped with a spring relieve or the like; which facilitates the unwinding and reeling up of the safety structure SW.

For the opening and closing, heavier safety structures SW may be equipped with a mechanical driving means RM of the safety structure SW (see Fig. 4), for example with a centre drive attached to the reeling core RC, or another mechanical closing and opening mechanism affecting the reeling core RC and/or the safety structure SW.

The safety device SD can also be implemented completely without the guiding means G guiding and/or supporting the safety structure SW, for example in the embodiment in which the safety structure SW is installed vertically with respect to its reeling direction (the lamellae in horizontal position) and the reel R, in turn, is placed in the upper position. In other words In the aforementioned situation the safety structure SW hangs on the support of the reeling core RC and the reel R substantially directly downwards. To increase the rigidity, the lower edge of the safety structure SW can in such a situation be attached e.g. to a floor or the like when the safety structure SW is open in the protective position. There may also be only one guiding means G shown in principle in Fig. 4, for supporting/guiding the safety structure SW.

The safety device SD can be equipped with a safety switch SL (shown as an example in Fig. 1 in the position C), which, when the safety structure SW is opened from the protective position, gives an alarm for the person operating the machine and/or automatically decelerates and/or stops the operation of the apparatus protected with said safety device SD, and/or prevents the starting of the apparatus when the safety structure SW is opened. The aforementioned safety switch may also contain a safety lock which prevents the opening of the safety structure SW when the apparatus is operating.

Furthermore, the function of the safety device SD can be automated in such a manner that the safety device is automatically reeled into its place to the protective position for example in a situation where the machine or apparatus to be protected is used in such a manner or the running speed of the same increases to such an extent that the part of the apparatus that is equipped with the safety device SD can cause a dangerous situation. Thus, for example during running preparations, the safety structure SW of the safety device SD is automatically reeled away from the front of the apparatus, wherein it is possible for example for the person operating the machine to maintain visual contact to the apparatus, and when the running speed increases, the safety structure/structures is/are closed automatically.

It is obvious that the invention is not limited solely to the embodiments presented above in the examples, but it can be modified within the inventive features disclosed hereinbelow in the claims.

## Claims

1. A safety device (SD) of paper and/or paperboard production or finishing line machine, whereby said safety device (SD) comprises at least
- a reeling core (RC) with a longitudinal axis that is in horizontal plane and which reeling core is arranged to be substantially parallel with respect to the cross-machine direction of said machine,
- safety structure (SW) that is composed of separate, substantially rigid lamellae (L) parallel to the axis of the reeling core (RC), which lamellae are attached to each other in an articulated manner, and
- the safety structure (SW) arranged to be reelable around said reeling core (RC).

2. The safety device (SD) according to claim 1, **characterized in that** at least a part of said reelable safety device (SD) is composed of substantially continuous texture, film or sheet made of flexible material.

3. The safety device (SD) according to claim 1 or 2, **characterized in that** said reelable safety device (SD) also comprises guiding means (G) such as guiding rails, in which guiding means (G) the safety structure (SW) is arranged to move on the support of its ends directed sideways towards the reeling direction of said safety structure (SW).

4. The safety device (SD) according to any of the preceding claims, **characterized in that** the entire surface area or part of the surface area of said safety structure (SW) and/or a lamella (L) forming a part of the safety structure has a sound attenuating structure, or it is coated with a sound attenuating material (81).

5. The safety device (SD) according to any of the preceding claims, **characterized in that** the entire surface area or part of the surface area of said safety structure (SW) and/or a lamella (L) forming a part of the safety structure is made of transparent material.

6. The safety device (SD) according to any of the preceding claims, **characterized in that** the entire surface area or part of the surface area of said safety structure (SW) and/or a lamella (L) forming a part of the safety structure reflects heat radiation.

7. The safety device (SD) according to any of the preceding claims, **characterized in that** the entire surface area or part of the surface area of said safety structure (SW) and/or a lamella (L) forming a part of the safety structure is equipped with cooling channels (71) inside and/or outside the structure.

8. The safety device (SD) according to any of the preceding claims, **characterized in that** the lamellae of said safety structure (SW) are made of aluminium profile.

9. The safety device (SD) according to any of the preceding claims, **characterized in that** safety device (SD) comprises a safety switch (SL), which is arranged to prevent the opening of the safety device (SD) during drive, or if the safety device (SD) is opened during the drive, to transmit information to the control system of the apparatus and/or to the person operating the apparatus protected with the safety device (SD).

10. The safety device (SD) according to any of the preceding claims, **characterized in that** the safety device (SD) comprises a driving means (RM) for mechanical opening and closing of the safety device.

11. The safety device (SD) according to claim 10, **characterized in that** said driving means (RM) opening and closing the safety device mechanically is arranged to be controlled with the control system of the apparatus protected with said safety device (SD).

12. The safety device (SD) according to any of the preceding claims, **characterized in that** the safety device (SD) comprises two or more safety structures (SW) which are arranged next to each other and/or successively with respect to their reeling direction and which have different reeling functions.

13. The safety device (SD) according to any of the preceding claims, **characterized in that** the safety device (SD) surrounds the target to be protected, thus forming a funnel-like structure for maintaining an optimal atmosphere in view of the process related to the target.

## Patentansprüche

1. Sicherheitsvorrichtung (SD) für eine Papier- und/oder Pappeherstellungs- oder -finishermaschine, wobei die Sicherheitsvorrichtung (SD) zumindest umfasst,
- einen Wickelkern (RC) mit einer Längsachse, die in einer horizontalen Ebene liegt, und welcher Wickelkern so angeordnet ist, dass er im Wesentlichen parallel zur Quermaschinenrichtung der genannten Maschine ist,
- eine Sicherheitsstruktur (SW), die aus getrennten, im Wesentlichen steifen, zur Achse des Wickelkerns (RC) parallelen Lamellen (L) zusammengesetzt ist, welche Lamellen in beweglicher Weise aneinander angebracht sind und
- wobei die Sicherheitsstruktur (SW) so angeordnet ist, dass sie um den Wickelkern (RC) aufwickelbar ist.

2. Sicherheitsvorrichtungen (SD) gemäß Anspruch 1, **dadurch gekennzeichnet, dass** zumindest ein Teil der aufwickelbaren Sicherheitsvorrichtung (SD) aus im Wesentlichen einer kontinuierlicher Textur, einem kontinuierlichen Film oder einem kontinuierlichen Blatt aus flexiblem Material besteht.

3. Sicherheitsvorrichtung (SD) gemäß Anspruch 1 oder 2, **dadurch gekennzeichnet, dass** die aufwickelbare Sicherheitsvorrichtung (SD) auch Führungsmittel (G) wie Führungsschienen umfasst, in welchem Führungsmittel (G) die Sicherheitsstruktur (SW) angeordnet ist, um sich durch Abstützen seiner seitwärtsgerichteten Enden, in Aufwickelrichtung der Sicherheitsstruktur (SW) zu bewegen.

4. Sicherheitsvorrichtung gemäß einem der vorhergehenden Ansprüche, **dadurch gekennzeichnet, dass** der gesamte Oberflächenbereich oder ein Teil des Oberflächenbereichs der Sicherheitsstruktur (SW) und/oder eine Lamelle (L), die einen Teil der Sicherheitsstruktur bildet, eine Geräuschdämpfungsstruktur hat, oder mit einem Geräuschdämpfungsmaterial (81) beschichtet ist.

5. Sicherheitsvorrichtung (SD) gemäß einem der vorhergehenden Ansprüche, **dadurch gekennzeichnet, dass** der gesamte Oberflächenbereich oder ein Teil des Oberflächenbereiches der Sicherheitsstruktur (SW) und/oder eine Lamelle (L), die Teil der Sicherheitsstruktur ist, aus transparentem Material hergestellt sind.

6. Sicherheitsvorrichtung (SD) gemäß einem der vorhergehenden Ansprüche, **dadurch gekennzeichnet, dass** der gesamte Oberflächenbereich oder ein Teil des Oberflächenbereichs der Sicherheitsstruktur (SW) und/oder eine Lamelle (L), die Teil der Sicherheitsstruktur ist, Wärmestrahlung reflektiert.

7. Sicherheitsvorrichtung (SD) gemäß einem der vorhergehenden Ansprüche, **dadurch gekennzeichnet, dass** der gesamte Oberflächenbereich oder ein Teil des Oberflächenbereichs der Sicherheitsstruktur (SW) und/oder eine Lamelle (L), die Teil der Sicherheitsstruktur ist, mit Kühlkanälen (71) innerhalb und/oder außerhalb der Struktur ausgerüstet sind.

8. Sicherheitsvorrichtung (SD) gemäß einem der vorhergehenden Ansprüche, **dadurch gekennzeichnet, dass** die Lamellen der Sicherheitsstruktur (SW) aus einem Aluminiumprofil hergestellt sind.

9. Sicherheitsvorrichtung (SD) gemäß einem der vorhergehenden Ansprüche, **dadurch gekennzeichnet, dass** die Sicherheitsvorrichtung (SD) einen Sicherheitsschalter (SL) umfasst, der vorgesehen ist, um das Öffnen der Sicherheitsvorrichtung (SD) während des Betriebs zu verhindern, oder wenn die Sicherheitsvorrichtung (SD) während des Betriebes geöffnet wird, eine Information an das Steuersystem des Gerätes und/oder an die Bedienungsperson des Gerätes, das mit der Sicherheitsvorrichtung (SD) geschützt ist, zu übertragen.

10. Sicherheitsvorrichtung (SD) gemäß einem der vorhergehenden Ansprüche, **dadurch gekennzeichnet, dass** die Sicherheitsvorrichtung (SD) Antriebsmittel (RM) zum mechanischem Öffnen und Schließen der Sicherheitsvorrichtung umfasst.

11. Sicherheitsvorrichtung (SD) gemäß Anspruch 10, **dadurch gekennzeichnet, dass** die Antriebsmittel (RM) zum mechanischem Öffnen und Schließen der Sicherheitsvorrichtung vorgesehen sind, um vom Steuerungssystem des Gerätes, das mit der Sicherheitsvorrichtung (SD) geschützt ist, gesteuert zu werden.

12. Sicherheitsvorrichtung (SD) gemäß einem der vorhergehenden Ansprüche, **dadurch gekennzeichnet, dass** die Sicherheitsvorrichtung (SD) zwei oder mehr Sicherheitsstrukturen (SW) enthält, die nebeneinander und/oder aufeinanderfolgend im Hinblick auf ihre Aufwickelrichtung angeordnet sind, und verschiedene Aufwickelfunktionen haben.

13. Sicherheitsvorrichtung (SD) gemäß einem der vorhergehenden Ansprüche, **dadurch gekennzeichnet, dass** die Sicherheitsvorrichtung (SD) das zu schützende Ziel umgibt, und so eine trichterförmige Struktur bildet, um eine optimale Atmosphäre, im Hinblick auf das mit dem Ziel verbundene Verfahren, aufrecht zu erhalten.

## Revendications

1. Dispositif de sécurité (SD) de machine de chaîne de finition ou de production de papier et/ou de carton, moyennant quoi ledit dispositif de sécurité (SD) comprend au moins
- un mandrin enrouleur (RC) avec un axe longitudinal qui est dans un plan horizontal et lequel mandrin enrouleur est agencé de manière à être essentiellement parallèle au sens travers de ladite machine,
- une structure de sécurité (SW) qui est composée de lamelles séparées essentiellement rigides (L) parallèles à l'axe du mandrin enrouleur (RC), lesquelles lamelles étant reliées les unes aux autres de manière articulée, et
- la structure de sécurité (SW) étant agencée de manière à pouvoir être enroulée autour dudit mandrin enrouleur (RC).

2. Dispositif de sécurité (SD) selon la revendication 1, **caractérisé en ce qu'**au moins une partie dudit dispositif de sécurité pouvant être enroulé (SD) est composée d'une texture, d'un film ou d'une feuille essentiellement continu réalisé en un matériau flexible.

3. Dispositif de sécurité (SD) selon la revendication 1 ou 2, **caractérisé en ce que** ledit dispositif de sécurité pouvant être enroulé (SD) comprend également des moyens de guidage (G) tels que des rails de guidage, moyens de guidage (G) dans lesquels la structure de sécurité (SW) est agencée pour se déplacer sur le support de ses extrémités dirigées vers le côté dans le sens d'enroulement de ladite structure de sécurité (SW).

4. Dispositif de sécurité (SD) selon l'une quelconque des revendications précédentes, **caractérisé en ce que** toute la zone de surface ou une partie de la zone de surface de ladite structure de sécurité (SW) et/ou une lamelle (L) formant une partie de la structure de sécurité présente une structure atténuant le son, ou elle est revêtue d'un matériau atténuant le son (81).

5. Dispositif de sécurité (SD) selon l'une quelconque des revendications précédentes, **caractérisé en ce que** toute la zone de surface ou une partie de la zone de surface de ladite structure de sécurité (SW) et/ou une lamelle (L) formant une partie de la structure de sécurité est réalisée en un matériau transparent.

6. Dispositif de sécurité (SD) selon l'une quelconque des revendications précédentes, **caractérisé en ce que** toute la zone de surface ou une partie de la zone de surface de ladite structure de sécurité (SW) et/ou une lamelle (L) formant une partie de la structure de sécurité réfléchit le rayonnement thermique.

7. Dispositif de sécurité (SD) selon l'une quelconque des revendications précédentes, **caractérisé en ce que** toute la zone de surface ou une partie de la zone de surface de ladite structure de sécurité (SW) et/ou une lamelle (L) formant une partie de la structure de sécurité est équipée de canaux de refroidissement (71) à l'intérieur et/ou à l'extérieur de la structure.

8. Dispositif de sécurité (SD) selon l'une quelconque des revendications précédentes, **caractérisé en ce que** les lamelles de ladite structure de sécurité (SW) sont réalisées en profilé d'aluminium.

9. Dispositif de sécurité (SD) selon l'une quelconque des revendications précédentes, **caractérisé en ce que** le dispositif de sécurité (SD) comprend un interrupteur de sécurité (SL), qui est agencé pour éviter l'ouverture du dispositif de sécurité (SD) pendant l'entraînement, ou si le dispositif de sécurité (SD) est ouvert pendant l'entraînement, pour transmettre des informations au système de commande de l'appareil et/ou à la personne faisant fonctionner l'appareil protégé avec le dispositif de sécurité (SD).

10. Dispositif de sécurité (SD) selon l'une quelconque des revendications précédentes, **caractérisé en ce que** le dispositif de sécurité (SD) comprend un moyen d'entraînement (RM) pour l'ouverture et la fermeture mécaniques du dispositif de sécurité.

11. Dispositif de sécurité (SD) selon la revendication 10, **caractérisé en ce que** ledit moyen d'entraînement (RM) ouvrant et fermant mécaniquement le dispositif de sécurité est agencé de façon à être commandé avec le système de commande de l'appareil protégé avec ledit dispositif de sécurité (SD).

12. Dispositif de sécurité (SD) selon l'une quelconque des revendications précédentes, **caractérisé en ce que** le dispositif de sécurité (SD) comprend deux structures de sécurité (SW) ou plus qui sont agencées les unes à côté des autres et/ou successivement par rapport à leur sens d'enroulement et qui ont différentes fonctions d'enroulement.

13. Dispositif de sécurité (SD) selon l'une quelconque des revendications précédentes, **caractérisé en ce que** le dispositif de sécurité (SD) entoure la cible à protéger, formant ainsi une structure ressemblant à un tunnel pour maintenir une atmosphère optimale en vue du processus se rapportant à la cible.
